# EUROPEAN PATENT APPLICATION

(11) **EP 2 306 288 A1**
(43) Date of publication of application: **06.04.2011**
(21) Application number: 09171422.0
(22) Date of filing: 25.09.2009
(51) Int. Cl.: G06F 3/048

(54) **Electronic device including touch-sensitive input device and method of controlling same**

(71) Applicant: RESEARCH IN MOTION LIMITED, Waterloo, Ontario N2L 3W8 (CA)
(72) Inventor: Griffin, Jason Tyler, Waterloo Ontario N2L 3W8 (CA); Wood, Todd Andrew, Waterloo Ontario N2L 3W8 (CA)
(74) Representative: Fennell, Gareth Charles

(57) **Abstract**

A method includes displaying information on a display of a portable electronic device, detecting, by a touch-sensitive input device, a gesture, performing a first function in response to detecting the gesture, and performing a zooming function on the information on the display when the gesture comprises a curved gesture.

## Description

The present disclosure relates generally to electronic devices including but not limited to portable electronic devices having touch-sensitive input devices and their control.

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. Touch-sensitive input devices such as a touch-sensitive display, also known as a touchscreen display, are particularly useful on handheld devices, which are small and have limited space for user input and output. The information displayed on the touch-sensitive displays may be modified depending on the functions and operations being performed.

Improvements in touch-sensitive input devices are desirable.

### GENERAL

A method may comprise displaying information on a display of a portable electronic device, detecting, by a touch-sensitive input device, a gesture, performing a first function in response to detecting the gesture, and performing a zooming function on the information on the display when the gesture comprises a curved gesture.

A computer-readable medium may have computer-readable code executable by at least one processor of a portable electronic device to perform the above method.

An electronic device may comprise a display configured to display information, a touch-sensitive input device configured to detect a gesture, a processor configured to perform a first function in response to detecting the gesture, and perform a zooming function on the information on the display when the gesture comprises a curved gesture.

### BRIEF DESCRIPTION OF THE DRAWINGS

FIG. 1 is a block diagram of a portable electronic device in accordance with the present disclosure.

FIG. 2 is a flowchart illustrating a method of facilitating manipulation and interaction with displayed information at a portable electronic device in accordance with the present disclosure.

FIG. 3 and FIG. 4 illustrate examples of a touch-sensitive display of a portable electronic device before and after a gesture in accordance with the present disclosure.

FIG. 5 illustrates an example of a display of another example of a portable electronic device, before and after a gesture in accordance with the present disclosure.

### DESCRIPTION OF PREFERRED EMBODIMENTS

The following describes a method of controlling a portable electronic device. The method includes displaying information on a display of a portable electronic device, detecting, by a touch-sensitive input device, a gesture, performing a first function in response to detecting the gesture, and performing a zooming function on the information on the display when the gesture comprises a curved gesture.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

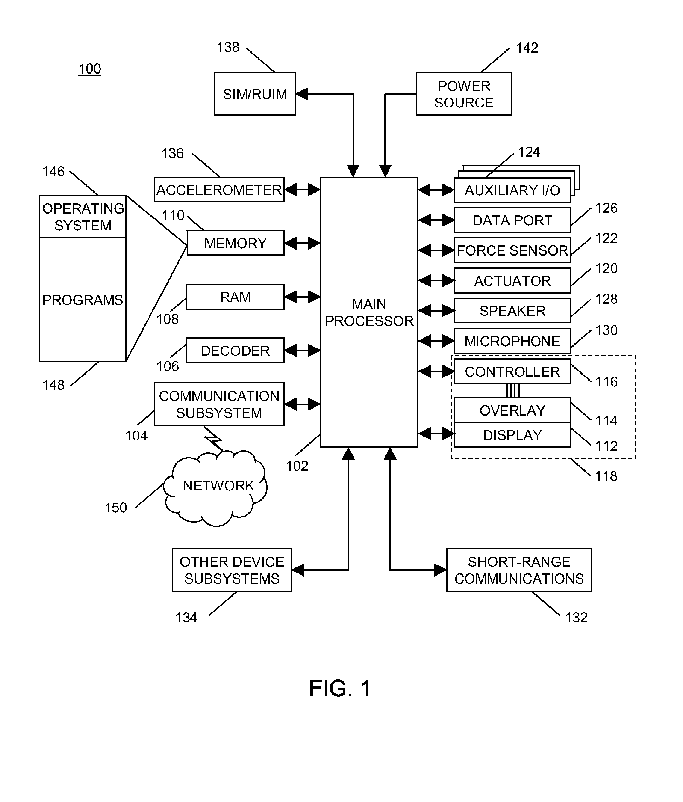

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The actuator(s) 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback.

A mechanical dome switch actuator may be utilized. In this example, tactile feedback is provided when the dome collapses due to imparted force and when the dome returns to the rest position after release of the switch.

Alternatively, the actuator 120 may comprise one or more piezoelectric (piezo) devices that provide tactile feedback for the touch-sensitive display 118. Contraction of the piezo actuator(s) applies a spring-like force, for example, opposing a force externally applied to the touch-sensitive display 118. Each piezo actuator includes a piezoelectric device, such as a piezoelectric (PZT) ceramic disk adhered to a metal substrate. The metal substrate bends when the PZT disk contracts due to build up of charge at the PZT disk or in response to a force, such as an external force applied to the touch-sensitive display 118. The charge may be adjusted by varying the applied voltage or current, thereby controlling the force applied by the piezo disks. The charge on the piezo actuator may be removed by a controlled discharge current that causes the PZT disk to expand, releasing the force thereby decreasing the force applied by the piezo disks. The charge may advantageously be removed over a relatively short period of time to provide tactile feedback to the user. Absent an external force and absent a charge on the piezo disk, the piezo disk may be slightly bent due to a mechanical preload.

A gesture begins at an origin point and follows a path while touch contact is maintained. A gesture may be long or short in distance or duration or both distance and duration. A gesture may also be detected by the touch-sensitive display 118. Points of a gesture are obtained at regular intervals in time or distance along the path of the gesture. The points along the path of the gesture are utilized to determine attributes of the gesture including, for example, direction, and duration. These attributes may be utilized in a panning operation or in zooming.

Several points of the gesture are utilized to determine if the gesture comprises a curved gesture by determining if the path, or a part of the path, forms at least a partial circle, i.e., not a full 360 degrees, utilizing a curve fitting process on the points. A maximum and minimum radius of the curve as well as a minimum number of radians or degrees or a percentage of the circle may apply to the curve fitting process. For example, to determine that the points fit a curve, within a tolerance level, the curve fitting process may be limited to a partial circle between 8mm and 30mm in diameter, where the path follows at least 15 degrees or π/12 radians. A path that falls outside these constraints is not determined to fit a curve and not determined to comprise a curved gesture. When the path is determined to fit a curve, the gesture is determined to comprise a curved gesture. The chronological order of the points of the gesture is utilized to determine the rotational direction, i.e., clockwise or counter-clockwise, for a curved gesture.

The touch-sensitive display 118 is configured to display information such as text, characters, symbols, images, pictures, icons and other items that may be displayed or rendered in an application.

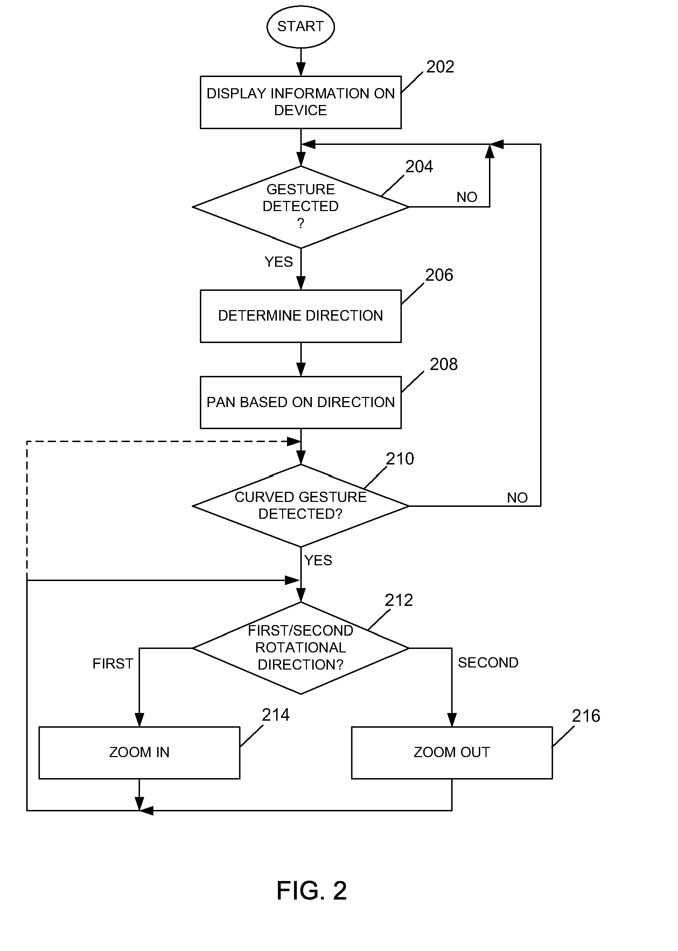

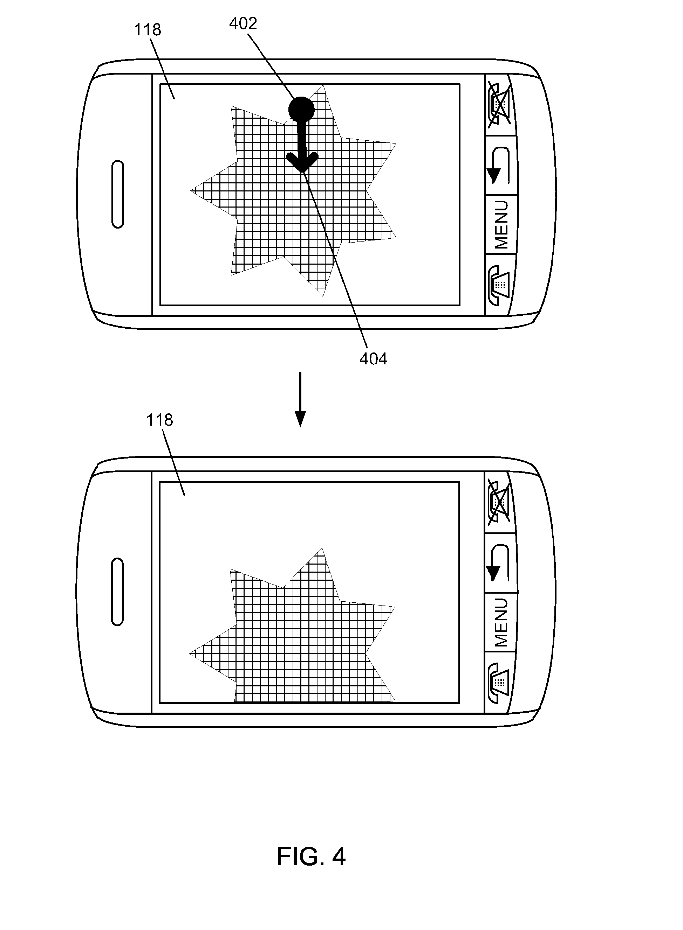

A flowchart illustrating a method of displaying information based on a detected gesture is shown in FIG. 2. The method may be carried out by software executed, for example, by the processor 102. Coding of software for carrying out such a method is within the scope of a person of ordinary skill in the art given the present description. Information is displayed 202 on the display 112 of the portable electronic device 100. When a touch comprising a gesture is detected 204, the direction of the gesture is determined 206, and a panning operation is performed 208 by scrolling or moving the displayed information based on the direction, as shown in FIG. 4.

Optionally, a short delay may be utilized before the panning operation is performed at 208, to first determine whether or not the gesture is a curved gesture and to inhibit panning when a zoom is quickly detected.

When a curved gesture is detected 210 within the gesture, the panning operation is discontinued and the rotational direction of the curved gesture, e.g., clockwise or counter-clockwise, is determined 212. When the curved gesture is detected to be formed in a first rotational direction, a zooming function is performed by zooming in 214, and the process continues at 212. Zooming may be performed to magnify or shrink the image based on the extent of the gesture along a circular path. For a curved gesture that forms a full circle where the origin point and the end point are at approximately the same location, further zooming is performed compared to a curved gesture that forms a partial circle. For example, zooming may be performed to increase to 200% of the original size when the gesture path forms a full circle. Alternatively, zooming may be performed based on the time the gesture follows a curved path. Further zooming may be performed with a greater gesture duration.

When the curved gesture is detected to be formed in a second rotational direction, a zooming function is performed by zooming out 216, and the process continues at 212. Zooming out may be performed to shrink the size of the image based on the extent of the gesture along a circular path. For a curved gesture that forms a full circle where the origin point and the end point are at approximately the same location, further zooming out is performed compared to a curved gesture that forms a partial circle. For example, zooming out may be performed to decrease to 50% of the original size when the gesture path forms a full circle. Alternatively, zooming out may be performed based on the time the gesture follows a curved path. Further zooming out may be performed with a greater gesture duration.

Detection of whether the gesture comprises a curved gesture may be repeated while the touch is maintained. A gesture may be detected 210 to comprise a curved gesture after an earlier determination 210 that the gesture does not comprise a curved gesture. For example, a user may pan information with a single gesture that comprises, at first, relatively straight path to find a desired part of the information, at which time the user changes the gesture to a curved gesture to zoom in on the relevant information.

Optionally, the process may continue at 210, instead of 212, after a zooming operation is performed at 214 or 216, as indicated by the dotted line. By returning to 210, zooming may be performed while the gesture comprises a curved gesture. Zooming may be followed by panning when the touch continues until the gesture is no longer curved. This optional return point provides for more extended and complicated gestures. For example, a single gesture may be utilized to pan information to find specific information, zoom in on that specific information, zoom out, pan again to another part of the information, and zoom again, all without having to discontinue the touch to change modes between panning and zooming.

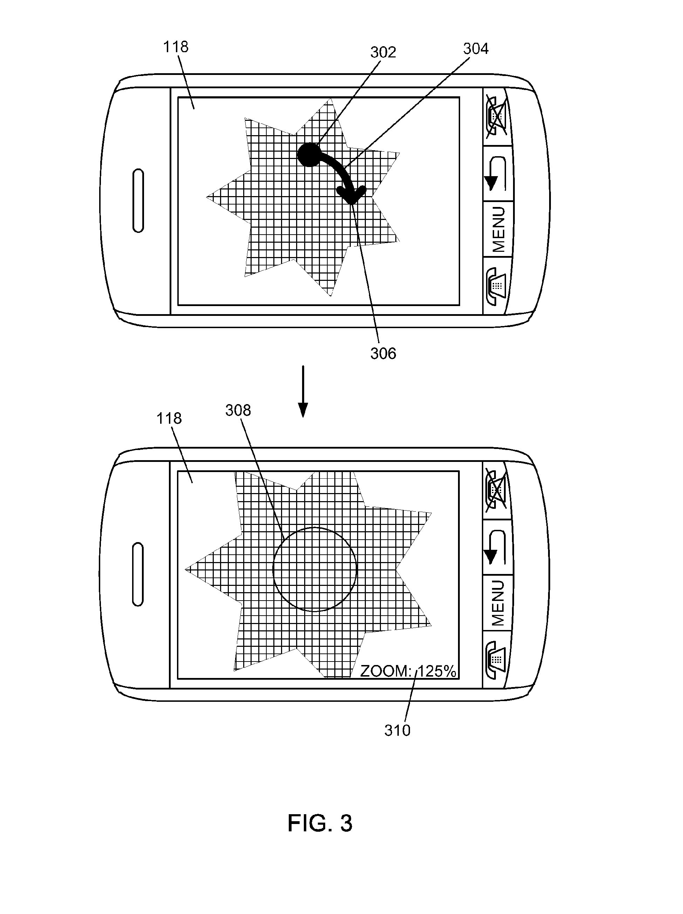

An example of a display before and after a gesture is shown in FIG. 3 and another example of a display before and after a gesture is shown in FIG. 4. In these examples, an image is displayed 202 on the touch-sensitive display 118. The image may be displayed, for example, in an image viewing application, in a web browser application, or any other suitable application. In the example of the display shown in FIG. 3, a gesture is detected 204, the direction of the gesture is determined 206, and the image is panned 208 based on the direction of the gesture. As shown in the upper display of FIG. 3, a curved gesture is detected 210 following the path 306 beginning at the origin point 302 and finishing at an end point 304. The direction of the gesture is 212 in a first rotational direction, which in this example is clockwise, and the image is zoomed in 214 based on the extent of the gesture along a circular path. The gesture extends 25% of a full circle, and the displayed size of the image is zoomed or magnified to 125% of the previous size in this example. As shown in the lower display of FIG. 3, a circle 308 is rendered on the touch-sensitive display 118 after the curved gesture is detected to provide a visual confirmation that a zooming function is being performed. An indication of the percentage of zoom 310, which in this example is 125%, is also displayed.

In the example of FIG. 4, a gesture is detected 204 and the direction of the gesture is determined 206, beginning at the origin point 402 and finishing at the end point 404 as shown in the upper display. The direction is 208 downward in the orientation shown in FIG. 4, and the image is panned 210 in the same direction by a distance that is substantially equivalent to the length of the gesture as shown in the lower display of FIG. 4. A curved gesture is not detected 210 in the gesture. The process ends when the touch ends.

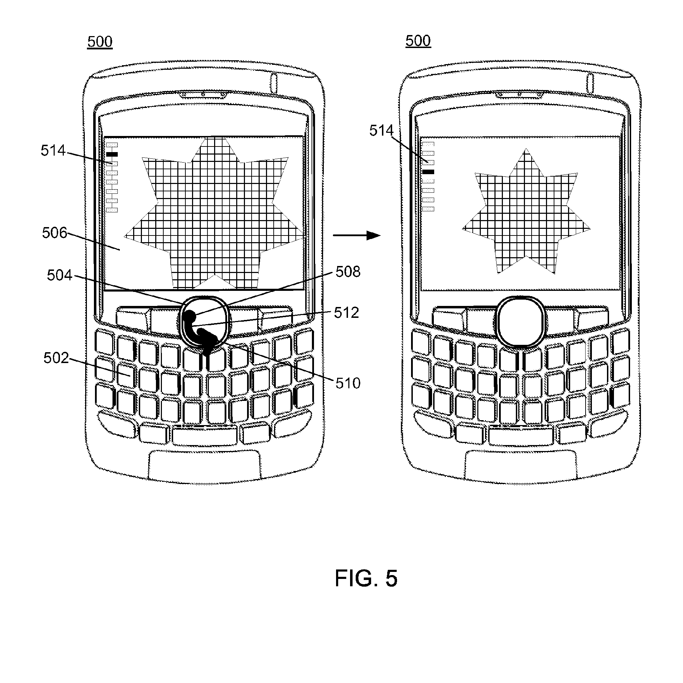

Another example of a display before and after a curved gesture is shown in FIG. 5. In this example, the portable electronic device 500 includes a keyboard 502 and an optical joystick 504, also referred to as an optical input device, for controlling, for example, a cursor on the display 506. The remainder of the features of the portable electronic device 500 may be similar to those described above.

A touch may be detected by the optical joystick 504 and processed by the processor, for example, to determine attributes of the touch including the touch location. A gesture may also be detected by the optical joystick 504. Touch locations, referred to as points of the gesture, may be taken at regular intervals in time or distance along the gesture.

A touch is followed by the optical joystick 504 and points of a gesture are taken at regular intervals in time or distance along the path of the gesture. The points along the path of the gesture are utilized to determine attributes of the gesture including, for example, direction, and duration. These attributes are utilized in a panning operation.

Several points of the gesture are utilized to determine if the path forms at least a partial circle by curve fitting utilizing the points of the path. The process of curve fitting may be subject to constraints including a maximum and minimum radius of the curve as well as a minimum number of radians or degrees or percentage of the circle. For example, to determine that the points fit a partial circle, within a tolerance level, the curve fitting process may be limited to fitting to a circle that is sufficiently large for detection by the optical joystick 504 and sufficiently small to fit on the optical joystick 504. Thus, the size may be dependent on the optical joystick 504.

In the example shown in FIG. 5, a picture is displayed 202 on the display 506, and a gesture is detected 204 by the optical joystick 504. The direction is determined 206 and the picture is panned 208 based on the direction of the gesture. A curved gesture following the path 512 is detected 210 beginning at the origin point 508 and finishing at the end point 510. The direction of the gesture is 212 in a second rotational direction, which in this example is counter-clockwise, and the image is zoomed out based on the extent of the gesture. The gesture extends 25% of a full circle, and the image is zoomed out to decrease the displayed size of the image to about 75% of the previous size. An indicator 514 of the level of zoom is also displayed on the display 506.

Advantageously, manipulation of displayed information including panning and zooming functionality is facilitated without requiring additional actions such as tapping, double-tapping, or menu selection to enter different modes of operation. Thus, zooming and panning may be provided without requiring additional actions, menus, or other selections. Fewer screens may be rendered and/or device use time may be reduced, decreasing power consumption and increasing time between charging of the battery.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
displaying information on a display of an electronic device;
detecting, by a touch-sensitive input device, a gesture;
performing a first function in response to detecting the gesture; and
performing a zooming function on the information on the display when the gesture comprises a curved gesture.

2. The method according to claim 1, wherein the first function comprises a panning operation.

3. The method according to claim 2, wherein the direction of the panning operation is based on the direction of the gesture.

4. The method according to claim 1, wherein the zooming function comprises zooming in when the curved gesture is in a first rotational direction.

5. The method according to claim 1, wherein the zooming function comprises zooming out when the curved gesture is in a second rotational direction.

6. The method according to claim 1, wherein performing a zooming function comprises determining an extent of the curved gesture and zooming to a level based on the extent.

7. The method according to claim 1, wherein performing a zooming function comprises zooming based on a length of time of the curved gesture.

8. The method according to claim 1, wherein the first function ends in response to determining that the gesture comprises a curved gesture.

9. A computer-readable medium having computer-readable code embodied therein, the computer-readable code executable by a processor of a portable electronic device to perform the method according to any one of claims 1 to 8.

10. An electronic device comprising:
a display configured to display information;
a touch-sensitive input device configured to detect a gesture; and
a processor configured to perform a first function in response to detecting the gesture, and perform a zooming function on the information on the display when the gesture comprises a curved gesture.

11. The electronic device according to claim 9, wherein the touch-sensitive input device comprises a touch-sensitive overlay disposed on the display.

12. The electronic device according to claim 9, wherein the touch-sensitive input device comprises an optical joystick.

## Amended claims

### Amended claims in accordance with Rule 137(2) EPC.

**1.** A method comprising:
displaying information on a display (112) of an electronic device (100);
detecting, by a touch-sensitive input device, a gesture, and in response to the detecting, panning on the information; and
detecting that the gesture comprises a curved gesture, and in response to the detecting of the curved gesture, zooming on the information.

**2.** The method according to claim 1, wherein the direction of panning is based on the direction of the gesture.

**3.** The method according to claim 1, wherein zooming comprises zooming in when the curved gesture is in a first rotational direction.

**4.** The method according to claim 1, wherein zooming comprises zooming out when the curved gesture is in a second rotational direction.

**5.** The method according to claim 1, wherein zooming comprises determining an extent of the curved gesture and zooming to a level based on the extent.

**6.** The method according to claim 1, wherein zooming comprises zooming based on a length of time of the curved gesture.

**7.** The method according to claim 1, wherein panning ends in response to determining that the gesture comprises the curved gesture.

**8.** A computer-readable medium having computer-readable code embodied therein, the computer-readable code executable by a processor (102) of an electronic device (100) to perform the method according to any one of claims 1 to 8.

**9.** An electronic device (100) comprising:
a display (112) configured to display information;
a touch-sensitive input device configured to detect a gesture,; and
a processor (102) configured to pan on the information in response to detecting the gesture; to detect that the gesture comprises a curved gesture, and when the curved gesture is detected, zoom on the information .

**10.** The electronic device according to claim 9, wherein the touch-sensitive input device comprises a touch-sensitive overlay (114) disposed on the display.

**11.** The electronic device according to claim 9, wherein the touch-sensitive input device comprises an optical joystick (504).
